Europäisches Patentamt

European Patent Office  (11) Publication number: **0 203 485**
**A1**
Office européen des brevets

(19)

(12) **EUROPEAN PATENT APPLICATION**

(21) Application number: **86106754.4**  (51) Int. Cl.⁴: **C 04 B 12/02,** C 04 B 28/34,
C 05 G 3/00

(22) Date of filing: **16.05.86**

(30) Priority: **20.05.85 US 736201**  (71) Applicant: **STAUFFER CHEMICAL COMPANY, Westport Connecticut 06880 (US)**

(72) Inventor: **Sherif, Fawzy Gamaleldin, 2 Babcock Court, Stony Point New York 10980 (US)**
Inventor: **Via, Francis Anthony, 2389 Ridge Street, Yorktown Heights, NY 10598 (US)**
(43) Date of publication of application: **03.12.86**  Inventor: **Post, Leo Blaise, 24 Lexington Road, New City New York 10956 (US)**
**Bulletin 86/49**  Inventor: **Toy, Arthur Dock Fon, 14 Katydid Lane, Stamford Connecticut 06903 (US)**

(74) Representative: **Jaeger, Klaus, Dr. et al, JAEGER & PARTNER Patentanwälte Bergstrasse 48 1/2, D-8035 München-Gauting (DE)**
(84) Designated Contracting States: **BE CH DE FR GB IT LI NL SE**

(54) Improved fast-setting cements from ammonium phosphate fertilizer solution.

(57) Improved magnesium phosphate fast-setting cements can be prepared by treating ammonium phosphate fertilizer solution with an effective amount of an acidic phosphate additive. This additive can include polyphosphoric acid, orthophosphoric acid, monoammonium phosphate, monomagnesium phosphate and mixtures thereof. The fertilizer solution is treated with sufficient additive to reduce the pyrophosphate content of the fertilizer below 8 weight percent expressed as $P_2O_5$. The treated ammonium phosphate fertilizer solution is capable of forming a fast-setting cement at ambient temperatures when mixed with a magnesium-containing compound and an optional aggregate.

ACTORUM AG

# IMPROVED FAST-SETTING CEMENTS FROM AMMONIUM PHOSPHATE FERTILIZER SOLUTION

## BACKGROUND OF THE INVENTION

### 1.  Field of the Invention

This invention relates to fast-setting cementitious compositions.  More particularly, it relates to a process for treating ammonium phosphate fertilizer solution for use in fast-setting cements.

### 2.  Related Art

Fast-setting cementitious compositions having utility for various purposes for which concretes are employed have been heretofore known.

U.S. Patent No. 3,202,520  (Enoch, August 8, 1965) discloses a rapid set non-hygroscopic cement composition consisting essentially of a blend of a phosphate derived from phosphoric acid and of alumina, and containing from 15 to 55 weight percent of $P_2O_5$ and from 45 to 75 weight percent of alumina, and from 5 to 18 weight percent of magnesium oxide.  The phosphoric acid is used in its liquid state then moisture is removed by drying the blend above $100^\circ C$.

U.S. Patent No. 3,525,632 (Enoch, August 25, 1970) discloses a rapid setting concrete cement composition which comprises dry blending magnesium-containing compounds, aluminum-containing compounds and phosphorus-containing compounds from stated sources in stated weight percentages, and then pulverizing the blended material without a separate drying stage.  The phosphorus-containing compound is a mixture derived from phosphoric acid, and at least 50 weight percent of one of trimagnesium phosphate, aluminum orthophosphate, and phosphoric anhydride.

U.S. Patent No. 3,879,209 (Limes et al., April 22, 1975) discloses a process for making a fast-setting concrete comprising establishing a mixture of an aggregate, containing at least 10 percent by weight of magnesia, and ammonium phosphates in aqueous solution. This reference further discloses that a commercial (agriculture fertilizer) product known as sequestered phosphatic solution (SPS) is particularly suitable as the source of the ammonium phosphate. No separate treatment of the SPS to improve its performance in fast-setting cements is disclosed in this reference.

U.S. Patent No. 4,059,455 (Limes et al., November 22, 1977) discloses a process for making a fast-setting concrete comprising establishing a mixture of an aggregate, containing at least 1 percent magnesia, and ammonium phosphates in aqueous solution. No separate treatment of the ammonium phosphate solution to improve its performance in fast-setting cements is disclosed in this reference.

U.S. Patent No. 4,174,227 (Tomic, November 13, 1979) discloses a grouting system comprising an acidic reactive component comprising at least one acidic oxy phosphorus compound selected from phosphoric acids, anhydrides of phosphoric acids and salts of phosphoric acids with multivalent metal cations, and a basic reactive component comprising at least one basic metal compound of a Group II or Group III metal capable of reacting with the oxy-phosphorus compound(s) in the presence of water to form a monolithic solid. This reference does not disclose a separate treatment of the acidic reactive component.

U.S. Patent No. 3,821,006 (Schwartz, June 28, 1974) discloses a patching composition consisting essentially of a reactive component of MgO with an acid phosphate salt and an inert aggregate component. The particle size of the inert aggregate component is related to the compressive strength of the cement formed at an early cure age. This reference does not disclose a separate treatment step for the acidic
component.

The mixtures employed in the methods of the
references discussed above, set and develop usable strength
much more rapidly than conventional materials. Nonetheless,
each of these references is limited, as discussed above, and
therefore distinguishable from the process of the present
invention in several ways.

U.S. Patent No. 3,960,580 (Stierli et al., June 1,
1976) discloses that the setting time of quick-setting
magnesium oxide/ammonium phosphate cementitious compositions
can be extended by the addition of specified oxy-boron
compounds such as sodium borate. The phosphate component of
the cementitious compositions disclosed by Stierli et al.
include an aqueous solution of ammonium phosphate containing
orthophosphate, pyrophosphate and polyphosphate with from
about 35 to 40 percent orthophosphate, about 45 to 50
percent pyrophosphate, about 9 to 11 percent
tripolyphosphate and about 2 to 5 percent of higher
polyphosphate. Stierli et al. also discloses the use of
ammonium phosphate fertilizer solution. However, Stierli et
al. is particularly directed to retarding setting times of
fast-setting cements and does not disclose the improved
cements of this invention.

U.S. Patent Application S.N. _____ filed on even
date herewith, in the names of R. H. Tieckelmann, E. J.
Powers, F. G. Sherif, L. Post and A. D.F. Toy, Attorney's
Docket No. C-7791, entitled IMPROVED PROCESS FOR DRYING
AMMONIUM PHOSPHATE SOLUTION ABSORBED ONTO POROUS MATERIAL,
discloses an improved process for drying a mixture of a
porous material and an aqueous solution of ammonium
phosphate, the solution to be absorbed by the porous
material. The improvement comprising adding an effective
amount of an acid, preferably orthophosphoric acid to the
solution prior to the drying step to improve the drying
step. In the improved process of this reference, the preferred porous material comprises diatomaceous earth, and the preferred solution comprises sequestered ammonium phosphate fertilizer solution.  However, this reference does not disclose the improved cement resulting from the use of treated liquid ammonium phosphate fertilizer solution.

## SUMMARY OF THE INVENTION

The treatment of certain ammonium phosphate fertilizer solution to yield fast-setting cements of consistent quality would be advantageous.

It is an object of the present invention to provide a process for treating ammonium phosphate fertilizer solution prior to its use in fast-setting cements.

Other objects and advantages of the present invention are shown throughout the specification.

In accordance with the present invention, a process has now been discovered for treating ammonium phosphate fertilizer solution so that, after combination with a magnesium-containing compound at ambient temperatures, an improved magnesium phosphate fast-setting cement results which comprises adding an effective amount of an acidic phosphate additive to the fertilizer solution to yield the improved cement.  In this process the additive can be polyphosphoric acid, orthophosphoric acid, monoammonium phosphate, monomagnesium phosphate and mixtures thereof. Sufficient additive can be added to reduce the pyrophosphate content of the fertilizer below 8 weight percent of the fertilizer.

The treated fertilizer solution thus formed can be mixed with a magnesium-containing compound and an aggregate at ambient temperatures to form a fast-setting cementitious composition.

## DETAILED DESCRIPTION OF THE INVENTION

Ammonium phosphate fertilizer solutions have heretofore been known to be suitable for use as the phosphate source in fast-setting magnesium phosphate cement of the type contemplated in the present invention. This fertilizer solution contains a mixture of orthophosphate and condensed phosphate species. In its original aqueous state, this fertilizer undergoes continuous hydrolysis while standing whereby the weight ratios of the different phosphate species keep changing, usually from high polyphosphate and low orthophosphate contents to low polyphosphate and high orthophosphate contents as the fertilizer ages. The condensed phosphates of this fertilizer solution can include pyro-, tri-, tetra-, etc. phosphate species. Because of this continuous hydrolysis, magnesium phosphate cements using liquid ammonium phosphate fertilizer as the phosphate source exhibit unpredictable qualities. Usually, when a fresh fertilizer solution is used, the cement mixture does not set at all or only forms a weak cement, and when an older fertilizer solution is used, the cement sets very rapidly with little or no working time to apply the cement. Liquid fertilizer solution also precipitates hard to handle insolubles upon standing and in cold weather the liquid freezes and gels, creating more handling problems.

These liquid fertilizer solutions are readily available commercial products. They are usually designated, e.g. 10-34-0, wherein the first number represents the weight concentration of ammoniacal nitrogen, the second number represents the weight concentration of $P_2O_5$ and the third number represents the weight concentration of potassium oxide. This invention contemplates a process for treating these fertilizers to yield consistent and improved fast-setting magnesium phosphate cements. The consistency and improvement being primarily related to the final compressive strength of the concrete structure formed by these cements and secondarily to the length of the setting time.

A particularly preferred fertilizer solution is Poly-N® 10-34-0 ammonium phosphate solution supplied by Arcadian Company and used primarily as an agricultural fertilizer. A typical analysis of the Poly-N® brand fertilizer shows 10.0 weight percent ammoniacal nitrogen and 34 weight percent total $P_2O_5$. Usually, sixty percent of the total $P_2O_5$ is polyphosphate. This commercial product contains approximately 2 weight percent of impurities, which usually do not adversely affect its use in preparing the fast-setting cements of this invention. The major impurities comprise approximately 0.5 weight percent iron, 0.5 weight percent sulfur, 0.2 weight percent magnesium (as MgO) and 0.15 weight percent of fluorine. This commercial product also contains approximately 50 weight percent water.

In this process the liquid fertilizer is treated by the addition of an acidic phosphate additive. This additive is added to the liquid fertilizer in an amount effective to yield an improved cement. One measure of an effective amount of the additive is the addition of sufficient additive to reduce the initial pyrophosphate content of the fertilizer. The pyrophosphate content of the fertilizer is initially within the range of from about 8 weight percent to about 15 weight percent expressed as $P_2O_5$. It has been found that ideally the pyrophosphate content of the fertilizer should be reduced to below about 8 weight percent of the fertilizer.

Several phosphate additives have been identified which are effective in reducing the pyrophosphate content of the fertilizer. These additives include polyphosphoric acid, orthophosphoric acid, monoammonium phosphate, monomagnesium phosphate and mixtures thereof. The effective amount of the additive added depends on the nature of the additive used. A certain amount of experimentation is needed to determine the effective amount of a particular phosphate additive to be used in a particular fertilizer solution. However, amounts of additive ranging from about 1 percent by weight of the liquid fertilizer to about 10 percent by weight are usually operative in this invention.

When the acidic phosphate additive is polyphosphoric acid, this acid should contain sufficient hydrogen ions to facilitate hydrolysis of the fertilizer solution. An orthophosphoric acid containing polyacid, e.g. 50 weight percent or more orthophosphoric acid, with a low pyrophosphoric acid content is preferred because sufficient hydrogen ions are available and the contribution of the additive to the total pyrophosphate content of the fertilizer is minimized.

The pH of the ammonium phosphate fertilizer solution before treatment with the phosphate additive is usually about neutral, i.e. a pH from about 6.5 to 7.5. After treatment, the particular pH can depend upon the age of the original fertilizer solution and the amount and type of phosphate additive used in the treatment step, however the pH is usually reduced to a pH range from about 4.0 to 6.0 with a pH of 5.0 being a preferred target.

The improvement achieved by the process and composition of this invention is particularly apparent when a fresh ammonium phosphate fertilizer solution is treated as compared with an aged solution. The observable differences in cement performance are more dramatic and consistent between fresh untreated fertilizer solution and fresh treated fertilizer solution. The differences in cement performance are less consistent between aged untreated fertilizer solution and aged treated fertilizer solution.

The treated liquid fertilizer can then be mixed with a magnesium-containing compound at ambient temperatures to form a fast-setting magnesium phosphate cement.

A composition capable of forming a fast-setting cement at ambient temperatures can be formulated from the treated liquid fertilizer of this invention. This composition comprises: a) an ammonium phosphate fertilizer solution which has been treated by a process comprising adding an effective amount of a phosphate additive to the fertilizer solution to improve the resulting fast-setting cement; and b) a magnesium-containing compound. This magnesium-containing compound is capable of reacting with the treated fertilizer solution to form a monolithic solid. This composition reacts and yields a fast-setting cement of consistent and predictable quality.

Generally the fast-setting cement of this invention can be used for producing fast-setting concrete structures, e.g. structures suitable for roadway construction and roadway patches or other load-bearing uses, however in its broader aspects, the invention is generally applicable in preparing concrete structures with various characteristics, e.g. high or low strength, for a variety of other purposes as well. The characteristics of any particular concrete structures formed can depend upon the weight ratio of the various components, the nature of the aggregate employed, the temperature conditions of application and the curing conditions as well as other factors.

Fast-setting cement can be applied indoors or outdoors to concrete drives, storage yards, warehouse and factory floors to repair and restore damaged surfaces. Fast-setting cement can be used to fill structural cracks in slabs and repair highway median barrier walls. This type of cement can be used in almost any situation requiring a quick, permanent repair of concrete at ambient temperatures. In addition, the fast-setting cement can be used for binding and coating metals and woods for structural and flame resistant applications.

Generally, the setting time for these fast-setting cements vary widely and can range from a few seconds up to several minutes. As a practical matter, the setting time must be sufficient to allow the magnesium-containing compound and optional aggregate to be thoroughly mixed with

0203485

the treated fertilizer to form a slurry or a non-collapsible putty and be applied to the intended area, whether a mold or a patch, prior to hardening into a monolithic solid. In quantitative terms, fast-setting means that the cement hardens in less than 30 minutes, usually in about 1 to 10 minutes, and reaches more than 500 psi of compressive strength in usually less than 2 hours.

The composition of the present invention comprises a treated fertilizer solution and a magnesium-containing compound. The preferred magnesium-containing compounds are magnesium oxide, magnesium hydroxide and magnesium carbonate. These compounds must be capable of reacting at ambient temperatures with the treated fertilizer solution to form a monolithic solid. Mixtures of these magnesium compounds can also be employed.

A particularly preferred magnesium-containing compound contains MgO. This MgO can be of low reactivity, of high reactivity or a mixture of low and high reactivity wherein the ratio of the constituents of the mixture is selected to achieve the working time and cement strength desired. This preferred MgO can usually be from about 4 percent to about 50 percent by weight of the overall composition.

A particulate aggregate, preferably graded sand, can be included in the composition in a controlled amount as a filler. Aggregate can greatly enhance the strength of the hardened concrete cement. Aggregate usage can range from 0 percent to about 90 percent by weight of the composition with a range of from about 40 percent to about 80 percent by weight of the composition being preferred. Other aggregate materials which can be used include particles of competent rocks or rock-forming minerals such as granite, basalt, dolomite, andesite, feldspar, amphibole, pyroxene, olivine, gabbro, rhyolite, syenite, diorite, dolerite, peridotite, trachyte, obsidian, quartz, etc., as well as materials such as slag, cinders, fly ash, glass cullet, wood chips and fibrous materials such as chopped metal wire (preferably steel), glass fibers, asbestos, cotton, and polyester and aramide fibers. Aggregates having different particle shapes and sizes can be used. Mixtures of different aggregates can also be used.

The various compositions of this invention react at ambient temperatures resulting in the production of unique fast-setting cements.

In a particular embodiment of the composition according to this invention, the liquid ammonium phosphate fertilizer solution is treated with an additive selected from the group consisting of polyphosphoric acid containing sufficient hydrogen ions to facilitate hydrolysis of the fertilizer solution, orthophosphoric acid, monoammonium phosphate, monomagnesium phosphate and mixtures thereof; the magnesium-containing compound is magnesium oxide; and the aggregate is silica. The resulting cement should exhibit acceptable strength and adequate working time.

The following Examples describe certain embodiments of this invention. Other embodiments will be apparent to one of ordinary skill in the art from a consideration of this specification or practice of the invention disclosed herein. It is intended that the specifications and Examples be considered as exemplary only, with the true scope and spirit of the invention being indicated by the claims which follow the Examples.

C-7606                          -11-

### EXAMPLES

Ammonium phosphate fertilizer solution was treated
with a phosphate additive then reacted with MgO and an
aggregate to prepare fast-setting magnesium phosphate
cements.  The compositions and results obtained are
summarized in the following Table.

### TABLE I

| Run | Am. Phos. Fert. Sol'n. Grams | Phosphate Additives Grams | MgO/ Aggregate | Initial Set Time Minutes | Compressive Strength After 2 hr.,psi |
|---|---|---|---|---|---|
| 1 | 86.0[a] | – | 404 | 10-15 | 800 |
| 2 | 83.0[a] | 3.0[d] | 404 | 7.0 | 2160 |
| 3 | 80.0[a] | 6.0[d] | 404 | 5.5 | 3820 |
| 4 | 86.0[b] | – | 404 | 18.0 | 800 |
| 5 | 66.0[b] | 20.0[e] | 404 | 6.0 | 3700 |
| 6 | 71.0[b] | 15.0[e] | 404 | 7.0 | 3100 |
| 7 | 76.0[b] | 10.0[e] | 404 | 7.5 | 3000 |
| 8 | 86.0[c] | – | 404 | 10.0 | 2400 |

a) fresh Poly-N® 11-37-0 brand ammonium phosphate
   fertilizer, 50 weight percent solution supplied by
   Arcadian Company.

b) fresh Poly-N® 10-34-0 brand ammonium phosphate
   fertilizer, 50 weight percent solution supplied by
   Arcadian Company.

c) same as Run 4 except fertilizer solution aged over seven
   months.

d) superphosphoric filtered acid, 70 weight percent $P_2O_5$,
   type super-49 from Texasgulf.

e) monoammonium phosphate, 50 weight percent solution.

The MgO/aggregate used in all the above runs was
Bostik® type 276 blended aggregate purchased from A. H.
Harris and Sons Inc. of New Jersey containing 20 weight
percent MgO and 80 weight percent aggregate.

The addition of the phosphate additive in Runs 2, 3
and 5-8 yielded cements of enhanced compressive strength as

0203485

compared to the controls in Runs 1 and 4.  Run 8
demonstrates that aged fertilizer solution yields a cement
with greater compressive strength than that resulting from
the use of fresh fertilizer solution.  However, the
compressive strengths of the cements resulting from the
treated fertilizer solutions were consistently high and in
all cases, except Run 2, were higher than that resulting
from the use of aged fertilizer solution.

What is Claimed is:

1.  A process for treating ammonium phosphate fertilizer solution so that, after combination with a magnesium-containing compound at ambient temperatures, an improved magnesium phosphate fast-setting cement results which comprises adding an effective amount of an acidic phosphate additive to the fertilizer solution to yield the improved cement.

2.  The process of Claim 1 wherein the additive is a polyphosphoric acid containing sufficient hydrogen ions to facilitate hydrolysis of said fertilizer solution.

3.  The process of Claim 1 wherein the additive is orthophosphoric acid.

4.  The process of Claim 1 wherein the additive is monoammonium phosphate.

5.  The process of Claim 1 wherein the additive is selected from the group consisting of orthophosphoric acid, monoammonium phosphate, monomagnesium phosphate and mixtures thereof.

6.  The process of Claim 1 wherein the fertilizer solution is treated with sufficient additive to reduce the pyrophosphate content of the fertilizer below 8 weight percent expressed as $P_2O_5$ of the fertilizer.

7.  The treated fertilizer solution resulting from the process of Claim 1.

8.  The treated fertilizer solution resulting from the process of Claim 2.

9.   The treated fertilizer solution resulting from the process of Claim 3.

10.   The treated fertilizer solution resulting from the process of Claim 4.

11.   The treated fertilizer solution resulting from the process of Claim 5.

12.   The treated fertilizer solution resulting from the process of Claim 6.

13.   A composition capable of forming a fast-setting cement at ambient temperatures which comprises:
    a)   an ammonium phosphate fertilizer solution which has been treated by a process comprising adding an effective amount of an acidic phosphate additive to the solution to improve the resulting fast-setting cement; and
    b)   a magnesium-containing compound.

14.   The composition of Claim 13 wherein the additive is a polyphosphoric acid containing sufficient hydrogen ions to facilitate hydrolysis of said fertilizer solution.

15.   The composition of Claim 13 wherein the additive is a orthophosphoric acid.

16.   The composition of Claim 13 wherein the additive is a monoammonium phosphate.

17.   The composition of Claim 13 wherein the additive is selected from the group consisting of orthophosphoric acid, monoammonium phosphate, monomagnesium phosphate and mixtures thereof.

0203485

18. The composition of Claim 13 wherein the magnesium-containing compound is magnesium oxide, hydroxide, carbonate or mixtures thereof.

19. The composition of Claim 13 wherein the fertilizer solution is treated with sufficient additive to reduce the pyrophosphate content of the fertilizer below 5 weight percent expressed as $P_2O_5$ of the fertilizer.

20. The composition of Claim 13 which further comprises an aggregate.

21. The composition of Claim 19 wherein the aggregate is silica.

## DOCUMENTS CONSIDERED TO BE RELEVANT

EP 86106754.4

| Category | Citation of document with indication, where appropriate, of relevant passages | Relevant to claim | CLASSIFICATION OF THE APPLICATION (Int. Cl.4) |
|---|---|---|---|
| D,X | DE - A - 2 259 015 (REPUBLIC STEEL CORP.)<br>* Claims 1-6; page 4, line 22 - page 5, line 1; page 7, lines 2-31 *<br>& US-A-3 879 209<br>-- | 1-21 | C 04 B 12/02<br>C 04 B 28/34<br>C 05 G 3/00 |
| X | GB - A - 2 135 986 (ARMSTRONG WORLD INDUSTRIES)<br>* Examples; claims 1-6,8,9 *<br>-- | 1-5,13-18,20,21 | |
| X | DE - A - 2 401 185 (SET PRODUCTS)<br>* Claims 1-15 *<br>-- | 1-5,13-18,20,21 | |
| X | EP - A1 - 0 088 170 (CELTITE INC.)<br>* Claims 1-3,8,10,11 *<br>-- | 1-5,13-18,20 | **TECHNICAL FIELDS SEARCHED (Int. Cl.4)** |
| D,X | US - A - 3 960 580 (STIERLI et al)<br>* Claims 1-5,7-9;11-16; example 1; column 3, lines 4-30,40-55 *<br>---- | 1-5,13-18,20,21 | C 04 B<br>C 05 B<br>C 05 G |

The present search report has been drawn up for all claims

| Place of search | Date of completion of the search | Examiner |
|---|---|---|
| VIENNA | 28-08-1986 | BECK |